# EUROPEAN PATENT APPLICATION

(11) **EP 4 745 077 A1**
(43) Date of publication of application: **20.05.2026**
(21) Application number: 24213851.9
(22) Date of filing: 19.11.2024
(51) Int. Cl.: B66C 13/46, B66C 19/00, H04N 23/51, B66C 13/12

(54) **INDUCTIVE POWER TRANSFER FEEDBACK IN A CONTAINER SCANNING SYSTEM**

(71) Applicant: CAMCO Technologies NV, 3001 Heverlee (BE)
(72) Inventor: Bossens, Jan Amandus Michel Maria, 3210 Linden (BE); De Geeter, Jef Simon Gaston, 3210 Linden (BE)
(74) Representative: Ipsilon Belgium

(57) **Abstract**

Example embodiments relate to a container scanning system (200) comprising a rail (201) that is mountable on a support or beam of a container handling crane, wherein the rail comprises space (202) for wiring; a sensing unit (210) movably mounted along the rail, wherein the sensing unit is configured to scan an exterior surface of a container and configured to be powered by inductive power transfer (207); and within the space for wiring (202), a timing belt (203) configured to move the sensing unit along the rail, wherein the timing belt comprises at least one wire member (252, 262, 272). Wherein the sensing unit (210) is further configured to generate a power feedback signal indicative for the operational state of the inductive power transfer (207) to the sensing unit, and configured to propagate the power feedback signal along the at least one wire member (252, 262); and wherein the container scanning system further comprises a contactless receiver (205) configured to contactless retrieve the power feedback signal from the at least one wire member (252, 262, 272).

## Description

### Field of the Invention

The present invention generally relates to powering a sensing unit of a container scanning system by inductive power transfer.

### Background of the Invention

A container scanning system allows scanning containers that are handled by a container handling crane. Handling the containers can include transferring containers to and from a ship, a train, a truck, or a trailer, i.e. loading and unloading. Scanning the handled containers allows identifying and tracking the containers. To this end, the container scanning system typically comprises a sensing unit with a camera or a sensor for scanning the exterior surface of the containers that are transferred by the container handling crane. The sensing unit may be movably mounted on a rail which is in turn mounted to a support or beam of the container handling crane. This allows moving the sensing unit into a suitable position to scan the container while it is being transferred by the container handling crane. EP2730532A1 discloses an example of a container scanning system.

The sensing unit typically travels substantial distances along the rail it is mounted to, and it may do so at substantial speeds. As such, conventional power wiring for powering the sensing unit provided within the rail may become tangled by the movement. To avoid this, the sensing unit of the container scanning system may be powered by inductive power transfer, IPT.

IPT typically requires a power feedback signal transmitted from the receiving side of the IPT, sometimes referred to as the secondary side or coil, back to the transmitting side of the IPT, sometimes referred to as the primary side or coil. The power feedback signal provides feedback information on the state or operational conditions of the IPT, which allows adjusting the power or frequency of the power signal to optimize the performance and efficiency of the IPT.

The power feedback signal may be transmitted via a wireless communication channel such as, for example, via radio, Bluetooth, or Wi-Fi. This has the problem that the power feedback signal is prone to interference and attenuation, which limits its reliability as distortions of the power feedback signal reduce the accuracy of the feedback information. This can result in incorrect adjustments in the power transfer process thereby affecting the efficiency, accuracy, and safety of an IPT system.

### Summary of the Invention

It is an object of the present invention, amongst others, to solve or alleviate the above identified problems and challenges by improving the reliability of inductive power transfer in a container scanning system.

According to a first aspect, this object is achieved by a container scanning system comprising:
- a rail that is mountable on a support or beam of a container handling crane, wherein the rail comprises space for wiring;
- a sensing unit movably mounted along the rail, wherein the sensing unit is configured to scan an exterior surface of a container and configured to be powered by inductive power transfer;
- within the space for wiring, a timing belt configured to move the sensing unit along the rail, wherein the timing belt comprises at least one wire member;
wherein the sensing unit is further configured to generate a power feedback signal indicative for the operational state of the inductive power transfer to the sensing unit, and configured to propagate the power feedback signal along the at least one wire member; and wherein the container scanning system further comprises a contactless receiver configured to contactless retrieve the power feedback signal from the at least one wire member.

The container handling crane may be any type of crane configured to load, unload, transfer, or stack containers typically used in freight transport, e.g. shipping containers. Container handling cranes may be used at ports, rail yards, and logistic hubs to transfer containers between ships, trucks, trains, storage yards, and trailers. The container handling crane may, for example, be a ship-to-shore crane, a rubber-tired gantry crane, a rail-mounted gantry crane, a straddle carrier, or an automated stacking crane.

The sensing unit may comprise one or more cameras and/or one or more sensors for scanning the exterior surface of a container. This can allow retrieving information from the container surface such as, for example, a unique identifier of the container, the presence or state of a seal attached to the container doors, an RFID tag, a class identification, or the international maritime dangerous goods, IMDG, code. As such, containers transferred by the container handling crane can be identified and tracked. The sensing unit is configured to be powered by inductive power transfer, IPT, and to generate a power feedback signal indicative for the operational state of said IPT.

The power feedback signal, also referred to as IPT power feedback signal, is a control signal for monitoring, regulating, and optimizing the power transfer process within an inductive power transfer system. The power feedback signal comprises information about the inductive power transfer conditions such as, for example, voltage, current, temperature, frequency, power, and efficiency. The power feedback signal can allow a transmitting side of the IPT to adjust the frequency, phase, and power of the inductive power transfer to maintain optimal efficiency and to avoid overloading or overheating.

In an inventive way, the at least one wire member of the timing belt is used as the transmission medium for the power feedback signal generated by the sensing unit. In other words, the power feedback signal is transmitted from the sensing unit, i.e. the receiving side of the IPT, to the contactless receiver, i.e. the transmitting side of the IPT, along the at least one wire member. The sensing unit may comprise a transmitter configured to transmit the generated power feedback signal along the at least one wire member by a wired connection. Alternatively, the sensing unit may comprise a contactless transmitter configured to transmit the generated power feedback signal contactless along the at least one wire member. Retrieving the power feedback signal from the at least one wire member is also achieved contactless, i.e. by the contactless receiver. This allows transmitting the power feedback signal along the at least one wire element of the timing belt without affecting normal operation of the timing belt.

Propagating the power feedback signal along the at least one wire member improves the reliability of the inductive power transfer to the sensing unit, as it is more robust to interference. This has the advantage that it can improve the efficiency, accuracy, and safety of the inductive power transfer to the sensing unit, as the power transfer process can be controlled more accurately and reliably. It is a further advantage that it can reduce the wiring of a container scanning system, as the at least one wire member may already be present within a typical timing belt. It is a further advantage that it allows transmitting the power feedback signal within the space for wiring without substantial attenuation due to the rail structure, which can be substantial for wireless communication signals such as Wi-Fi, Bluetooth, or radio, along the relatively substantial lengths of the rail required for a container scanning system.

According to an example embodiment, the at least one wire may be embedded within the timing belt, or the at least one wire member may be mounted onto an external surface of the timing belt.

According to an example embodiment, the at least one wire member may be made of a conductive material or a light-conductive material.

A light-conductive material refers to any material that can effectively transmit light, enabling it to travel through the light-conductive material. A light-conductive material may, for example, be an optical fibre, a glass, a plastic polymer, or certain crystals. If the at least one wire member is made of a light-conductive material, the power feedback signal may thus be propagated along the at least one wire member as an optical signal.

A conductive material refers to any material that can effectively transmit the flow of an electric current. A conductive material may, for example, a metal such as copper, an alloy such as steel, a semiconductor material, or a carbon-based material. If the at least one wire member is made of a conductive material, the power feedback signal may thus be propagated along the at least one wire member as an electrical signal.

According to an example embodiment, the at least one wire member may be a tensile cord configured to reinforce the timing belt.

A tensile cord is sometimes also referred to as a tensile member. Tensile cords provide strength and reinforcement to the timing belt, thereby assisting in maintaining the shape of the timing belt, avoiding stretching of the timing belt, and improving durability under tension. Tensile cords are typically embedded within the timing belt material, e.g. rubber or polyurethane. This allows using an element typically present within timing belts to transmit the power feedback signal. This has the advantage that no additional wiring is to be provided within the rail to transmit the power feedback signal.

According to an example embodiment, the container scanning system may further comprise, in the space for wiring, an inductive power transfer wiring along which a power signal propagates for inductive power transfer to the sensing unit; and wherein the sensing unit may further comprise an induction receiver element that is contactless coupled to the induction power transfer wiring.

According to an example embodiment, the inductive power transfer wiring may extend along at least a portion of the rail along which the sensing unit is moveable.

This allows powering the sensing unit by inductive power transfer along the range of motion of the sensing unit along the rail regardless of its position along the rail.

According to an example embodiment, the inductive power transfer wiring may be a Litz wire.

The Litz wire comprises a plurality of relatively thin strands of individually insulated wires that may be twisted or woven together. This can allow to distribute the current more evenly across the surface area of the wire, reduce the effective resistance, reduce the skin effect losses, and reduce the proximity effect losses.

According to an example embodiment, the container scanning system may further comprise one or more inductive battery charging stations arranged adjacent to the rail at respective positions; wherein the one or more inductive battery charging stations receive a power signal for inductive power transfer to the sensing unit; and wherein the sensing unit further comprises a battery configured to power the sensing unit, and an induction receiver element configured to charge the battery when the induction charging element is contactless coupled to a battery charging station.

This allows charging the battery of the sensing unit at distinct predetermined positions along the rail.

According to an example embodiment, the container scanning system may further comprise a controller configured to receive the power feedback signal from the contactless receiver; and control the inductive power transfer to the sensing unit based on the power feedback signal.

The controller may be configured to adjust the frequency at which the primary coil operates, the input voltage supplied to the primary coil, the input current supplied to the primary coil, the phase difference between the voltage and current supplied to the primary coil, and/or the cooling of the primary coil. This can allow improving the power transfer, reducing losses, improving efficiency, avoiding overheating, adapting to the required load, and avoiding thermal degradation.

According to an example embodiment, the power feedback signal may comprise a state of charge of the battery, and the controller may further be configured to move the sensing unit along the rail into a position adjacent to an inductive battery charging station based on the state of charge of the battery.

The controller may move the sensing unit along the rail by moving the timing belt. This can, for example, be achieved by controlling a servo motor coupled to a pulley that engages the timing belt. The controller may for example move the sensing unit into a charging position, i.e. a position adjacent to an inductive battery charging station, when the state of charge drops below a predetermined threshold.

According to an example embodiment, the sensing unit may further comprise a wireless transceiver configured to transmit information of the exterior surface of the container.

According to an example embodiment, the wireless transceiver may be configured to transmit information of the exterior surface of the container over a point-to-point data bridge.

According to an example embodiment, the sensing unit may be coupled to a rail car movably coupled to the rail.

According to a second aspect, the disclosure relates to a method for controlling inductive power transfer in a container scanning system; the container scanning system comprising a rail that is mountable on a support or beam of a container handling crane, wherein the rail comprises space for wiring; a sensing unit movably mounted along the rail, wherein the sensing unit is configured to scan an exterior surface of a container and configured to be powered by inductive power transfer; and the system further comprising, within the space for wiring, a timing belt configured to move the sensing unit along the rail, wherein the timing belt comprises at least one wire member; the method comprising:
- by the sensing unit, generating a power feedback signal indicative for the operational state of the inductive power transfer to the sensing unit;
- by the sensing unit, propagating the power feedback signal along the at least one wire member; and
- by a contactless receiver, retrieving the power feedback signal contactless from the at least one wire member.

According to an example embodiment, the method may further comprise controlling the inductive power transfer to the sensing unit based on the power feedback signal by modulating a power signal for inductive power transfer.

### Brief Description of the Drawings

Fig. 1 shows an example of an existing container scanning system for scanning containers that are handled by a container handling crane;
Fig. 2 shows a container scanning system according to example embodiments;
Fig. 3 shows an example embodiment of a container scanning system further configured to power the sensing unit by inductive power transfer at one or more predetermined positions along the rail; and
Fig. 4 shows steps of a method for controlling inductive power transfer in a container scanning system, according to example embodiments.

### Detailed Description of Embodiment(s)

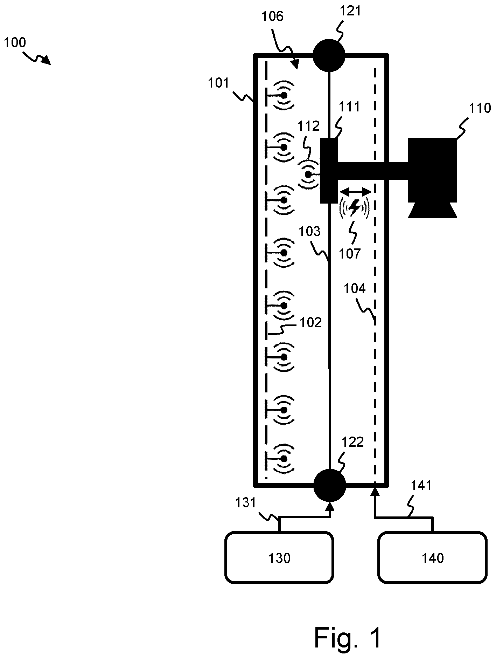

Fig. 1 shows an example of an existing container scanning system 100 configured to scan containers that are handled by a container handling crane. A container handling crane may be any type of crane configured to load, unload, transfer, or stack containers typically used in freight transport, e.g. shipping containers. Container handling cranes may be used at ports, rail yards, and logistic hubs to transfer containers between ships, trucks, trains, storage yards, and trailers. A container handling crane may, for example, be a ship-to-shore crane, a rubber-tired gantry crane, a rail-mounted gantry crane, a straddle carrier, or an automated stacking crane. The container scanning system 100 may be mounted to such a container handling crane. To this end, the container scanning system 100 comprises a rail 101 that is mountable on a support or a beam of a container handling crane. A support may refer to a part of the crane structure that extends substantially vertical, while a beam may refer to a part of the crane structure that extend substantially horizontal.

The container scanning system 100 comprises a sensing unit 110 configured to scan an exterior surface of a container handled by the crane. The sensing unit 110 may comprise one or more cameras and/or one or more sensors for scanning the exterior surface of the container. This can allow retrieving information from the container surface such as, for example, a unique identifier of the container, the presence or state of a seal attached to the container doors, an RFID tag, a class identification, or the international maritime dangerous goods, IMDG, code.

To allow the sensing unit 110 to move into a suitable position to scan the handled container, the sensing unit 110 is movably mounted along the rail 101. Moving the sensing unit 110 along the rail 101 may be achieved by means of a timing belt 103 whereto the sensing unit is coupled. Timing belt 103 may be looped around and engaged by two pulleys 121, 122 at opposite ends of the rail 101. One or more of the pulleys 121, 122 may be coupled to a motor 130 configured to adjust the rotational position of the one or more pulleys 121, 122, e.g. in Fig. 1 motor 130 is capable of rotating 131 pulley 122. As such, the timing belt 103 loops around and rotates between the two pulleys 121, 122. The sensing unit 110 may be directly coupled to the timing belt 103. Alternatively, the sensing unit 110 can be coupled to a rail car 111 attached to the timing belt 103. In doing so, the sensing unit 110 can move along the rail 101 into a suitable scanning position and, thus, is capable of scanning a container surface while the container is being moved or transferred by the container handling crane without having to bring the container into a predetermined scanning position.

The rail 101 may further comprise a space for wiring 106. Such a space for wiring 106 may be enclosed by the rail 101. Rail 101 may thus be shaped as a hollow structure wherein the hollow part of the structure serves as an internal channel for wiring 102, 104, the timing belt 103, and/or the pulleys 121, 122. Rail 101 may, for example, be shaped as a hollow tube or a hollow beam. Rail 101 may, for example, be made of aluminium or stainless steel.

To allow the sensing unit 110 to move into a suitable position to scan a handled container, the sensing unit 110 may be configured to travel a substantial distance along the rail 101, i.e. it can be desirable to mount rail 101 such that it extends along most of the outreach or lifting height of the crane. Next generation handling cranes may have lifting heights exceeding 50 meters. Moreover, the sensing unit 110 may be configured to travel those substantial distances at relatively high velocities to reach the suitable position to scan the handled container quickly so as to not interrupt or slow down the container handling. As such, conventional power wiring for powering the sensing unit 110 provided within the rail may easily become tangled by the movement of the sensing unit 110. To avoid this, the sensing unit 110 may be powered by inductive power transfer, IPT 107. To this end, the container scanning system 100 may comprise, in the space for wiring 106, inductive power wiring 104 to supply power to the sensing unit 110. In other words, the inductive power wiring 104 serves as the primary coil in the inductive power transfer system. The inductive power transfer 107 may further be controlled by a controller 140, e.g. by controlling the voltage, current, and frequency of the power signal 141 send to the power wiring 104.

Inductive power transfer 107 typically requires a power feedback signal transmitted from the receiving side of the IPT 107, sometimes referred to as the secondary side or coil, back to the transmitting side of the IPT 107, sometimes referred to as the primary side or coil. In other words, a power feedback signal nay be transmitted from the sensing unit 110 to the controller 140. The power feedback signal provides feedback information on the state or operational conditions of the IPT 107, which in turn allows adjusting the power signal 141 to optimize the performance and efficiency of the IPT 107.

This is typically achieved by a transmitter antenna 112 within the sensing unit 110 that is configured to transmit the power feedback signal via a wireless communication channel such as, for example, radio, Bluetooth, or Wi-Fi. However, transmitting the IPT power feedback signal via such wireless communication channels remains prone to interference which distorts the signal. This limits the reliability of the feedback signal as distortion of the power feedback signal affects the retrieved feedback information. This can result in incorrect adjustments in the power transfer process based on an erroneous feedback signal, e.g. incorrect adjustments of power signal 141. Such an incorrect adjustment of the IPT process may, for example, result in over- or under-delivery of power, over- and under-compensation leading to instabilities in power delivery, operation at non-optimal frequencies or voltage levels leading to greater power losses in the form of heat generation, thermal degradation of components, or undue interruptions of the power transfer process. Thus, an IPT feedback signal that is prone to interference can affect the efficiency, accuracy, and safety of the IPT system. It is thus desirable to improve the reliability of inductive power transfer 107 in container scanning system 100.

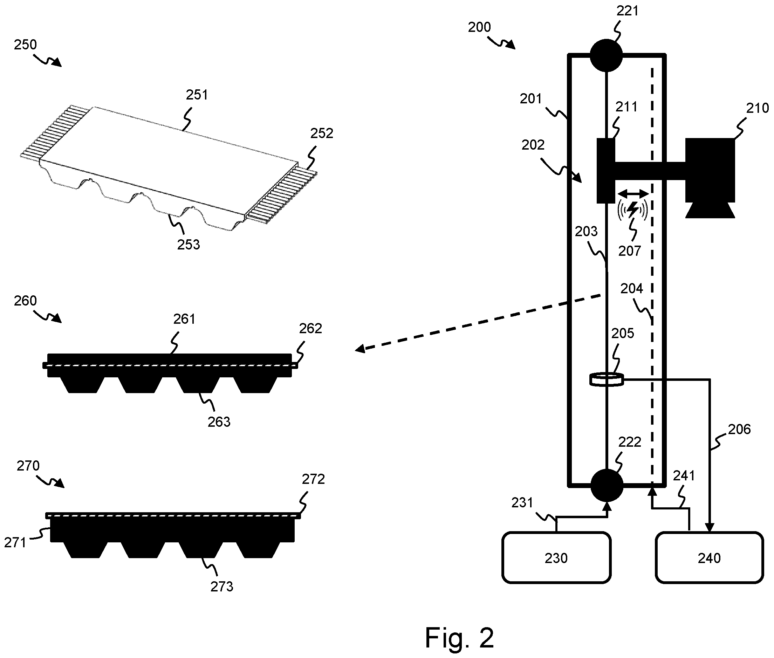

Fig. 2 shows a container scanning system 200 according to example embodiments. The container scanning system 200 comprises a rail 201 that is mountable on a support or a beam of a container handling crane, wherein the rail comprises space for wiring 202. The container scanning system 200 further comprises a sensing unit 210 movably mounted along the rail 201. The sensing unit 210 is further configured to scan an exterior surface of a container and configured to be powered by inductive power transfer 207. The container scanning system 200 further comprises, within the space for wiring 202, a timing belt 203 configured to move the sensing unit 210 along the rail 201. The container scanning system 200 may further comprise at least two pulleys 221, 222 around which the timing belt 203 is looped. At least one of the two pulleys 221, 222 may be coupled to a motor 230 configured to adjust the rotational position of the at least one pulley 222 such that the timing belt moves around pulleys 221, 222, thereby moving the sensing unit 210 along the rail 201. It will be apparent that the rail 201, the sensing unit 210, the timing belt 203, the pulleys 221, 222, and the motor 230 may be substantially the same as discussed in relation to the container scanning system 100 of Fig. 1.

The timing belt 203 of container scanning system 200 further comprises at least one wire member 252, 262, 272. Fig. 2 shows example embodiments 250, 260, 270 of timing belt 203. In the first example embodiment 250, a perspective view of a cut-away portion of timing belt 203 is shown. This timing belt 250 may comprise a plurality of wire members 252 that may be embedded within the timing belt 250. In other words, the wire members 252 are fully enclosed by the material of the timing belt 250, e.g. rubber or polyurethane. The wire members 252 may thus be provided between the body 251 of the timing belt 250 and the tooth facing 252 of the timing belt 250. The second example embodiment 260 shows a side view of a cut-away portion of timing belt 203. This timing belt 260 may comprise a single wire member that may be embedded within the timing belt material, i.e. between the body 261 and the tooth facing 263. The third example embodiment 270 shows a side view of a cut-away portion of timing belt 203. This timing belt 270 may comprise one or more wire members 272 that may be mounted onto an external surface of the timing belt. In the example embodiment 270, the one or more wire members 272 are mounted on top of the body 271 of the timing belt.

The one or more wire members 252, 262, 272 may be tensile cords configured to reinforce the timing belt 203. A tensile cord is sometimes also referred to as a tensile member. Tensile cords provide strength and reinforcement to the timing belt 203, thereby assisting in maintaining the shape of the timing belt, avoiding stretching of the timing belt, and improving durability under tension. It is common for timing belts to include one or more tensile cords.

In an inventive way, the container scanning system 200 according to embodiments of the present disclosure is configured to use the at least one wire member 252, 262, 272 of the timing belt 203 as a transmission medium for IPT power feedback signals generated by the sensing unit 210. To this end, the sensing unit 210 is configured to propagate the power feedback signal along the at least one wire member 252, 262, 272, and the container scanning system further comprises a contactless receiver 205. The contactless receiver 205 is configured to contactless retrieve the power feedback signal from the at least one wire member 252, 262, 272, i.e. at the primary side or transmitting side of the inductive power transfer. Thus, the power feedback signal is transmitted from the sensing unit 210, i.e. the receiving side of the IPT 207, to the contactless receiver 205, i.e. at the transmitting side of the IPT 207, along the at least one wire member 252, 262, 272. It will thus be apparent that the at least one wire member 252, 262, 272 may be a tensile cord already present within a typical timing belt or may be specifically provided within or on top of the timing belt for the purpose of propagating the power feedback signal.

The at least one wire member 252, 262, 272 may be made of a conductive material. A conductive material refers to any material that can effectively transmit the flow of an electric current, i.e. an electrically conductive material. A conductive material may, for example, be a metal such as copper, an alloy such as steel, a semiconductor material, or a carbon-based material. Tensile cords of timing belts are, amongst other conductive materials, commonly made of steel. It will be apparent that, if the at least one wire member 252, 262, 272 is made of a conductive material, the power feedback signal may be propagated along the at least one wire member as an electrical signal. To this end, the sensing unit 210 may further comprise a transmitter configured to transmit the generated power feedback signal as an electrical signal along the at least one wire member by means of a wired connection. Alternatively, the sensing unit may comprise a wireless transmitter configured to contactless transmit the generated power feedback signal along the at least one wire member as an electrical signal. Such a contactless transmitter may, for example, operate according to inductive coupling and electromagnetic field coupling principles in order to modulate a magnetic field around the conductive wire members 252, 262, 272, i.e. around the timing belt 203, that results in an electrical current within the wire members. The contactless receiver 205 may then pick up the electrical current within the wire members, thereby retrieving the power feedback signal.

Alternatively, the at least one wire member 252, 262, 272 may be made of a light-conductive material, i.e. an optical material. A light-conductive material refers to any material that can effectively transmit light, enabling it to travel through the light-conductive material. A light-conductive material may, for example, be an optical fibre, a glass, a plastic polymer, or certain crystals. It will be apparent that, if the at least one wire member is made of a light-conductive material, the power feedback signal may be propagated along the at least one wire member as an optical signal. To this end, the sensing unit 210 may further comprise a transmitter configured to transmit the generated power feedback signal as an optical signal along the at least one wire member 252, 262, 272.

Propagating the power feedback signal along the at least one wire member 252, 262, 272 improves the reliability of the inductive power transfer 207 to the sensing unit 210, as it is more robust to interference. This has the advantage that it can improve the efficiency, accuracy, and safety of the inductive power transfer 207 to the sensing unit, as the power transfer process can be controlled more accurately and reliably. It is a further advantage that it can reduce the wiring of the container scanning system 200, as the at least one wire member 252, 262, 272 may already be present within a typical timing belt. It is a further advantage that it allows transmitting the power feedback signal within the space for wiring 202 without substantial attenuation due to the rail structure 201, which can be substantial for wireless communication signals such as Wi-Fi, Bluetooth, or radio, along the relatively substantial lengths of the rail required for a container scanning system.

The container scanning system 200 may further comprise a controller 240 configured to receive 206 the power feedback signal from the contactless receiver 205. The controller 240 may further be configured to demodulate the power feedback signal and extract the feedback information included therein. Based on this extracted information, the controller may further be configured to control the inductive power transfer 207 to the sensing unit 210. This can allow improving the power transfer, reducing losses, improving efficiency, avoiding overheating, adapting to the required load, and avoiding thermal degradation. This can be achieved by adjusting the frequency of the power signal 241, the input voltage of the power signal 241, the input current of the power signal 241, or the phase difference between the voltage and current of the power signal 241. In other words, controller 240 may be configured to adjust the operational conditions of the primary coil of the IPT 207, i.e. inductive power transfer wiring 204.

The inductive power transfer wiring 204 may extend along a portion of the rail 201 along which the sensing unit 210 is moveable. In other words, the portion of the rail 201 that comprises inductive power transfer wiring 204 may substantially correspond to the range of motion of the sensing unit 210 along the rail. In the example illustrated in Fig. 2, the sensing unit 210 is capable of moving along the entire length of rail 201. As such, the IPT power wiring 204 also extends along the entire length of the rail 201. This allows powering the sensing unit 210 by inductive power transfer 207 along the entire range of motion of the sensing unit 210 along the rail. It will be apparent that the moveable range of the sensing unit 210 may be smaller than the length of the rail 201.

The inductive power wiring 204 may be a Litz wire comprising a plurality of relatively thin strands of individually insulated wires that may be twisted or woven together. This can allow to distribute the current more evenly across the surface area of the wire, reduce the effective resistance, reduce the skin effect losses, and reduce the proximity effect losses.

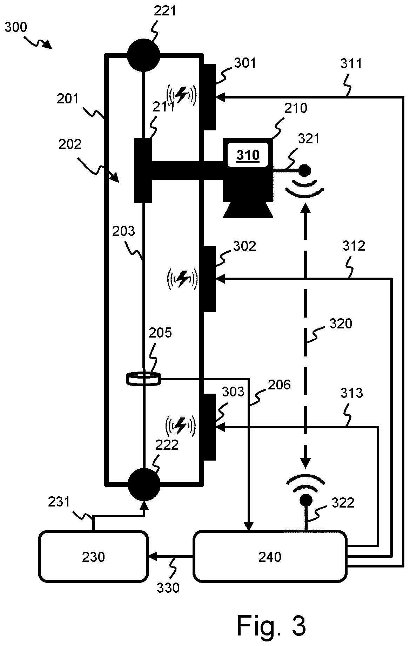

Fig. 3 shows an example embodiment of a container scanning system 300 configured to power the sensing unit 210 by inductive power transfer at one or more predetermined positions. To this end, the container scanning system 300 comprises one or more inductive battery charging stations 301, 302, 303 arranged adjacent to the rail 201 at respective positions along the rail. It will be apparent that Fig. 3 illustrates an example embodiment wherein the one or more charging stations 301, 302, 303 are positioned at an outer side of the rail wall but that the one or more charging stations 301, 302, 303 may also be positioned at an inner side of the rail, i.e. within the space for wiring 202.

The charging stations 301, 302, 303 may be configured to receive respective power signals 311, 312, 313 for inductive power transfer to the sensing unit 210. In other words, the charging stations 301, 302, 303 are configured to operate as the primary coil in the inductive power transfer system. The power signals 311, 312, 313 may be controlled by controller 240.

The sensing unit 210 may further comprise an induction receiver element configured to operate as the secondary coil in the inductive power transfer system. In doing so, the sensing unit 210 may be power by IPT when its induction receiver element is positioned near a charging station 301, 302, 303. As this would leave the sensing unit 210 without power in positions along the rail 201 without nearby charging station 301, 302, 303, the sensing unit 210 may further comprise a battery 310 or energy storage system configured to power the sensing unit 210. This allows to charge the battery 310 of the sensing unit 210 at distinct predetermined positions along the rail 201.

The controller 240 may further be configured to move the sensing unit 210, and thus its induction receiver element, into a position adjacent to an inductive battery charging station 301, 302, 303 when the battery 310 of the sensing unit 210 requires charging, i.e. when its state of charge is too low. This can be achieved by including the state of charge of the battery within the feedback information of the IPT power feedback signal. The controller 240 may then obtain the state of charge of the battery 310 from the feedback signal 206 retrieved by contactless receiver 205. Based on this state of charge, controller 240 may provide a control signal 330 to motor 230 to move the sensing unit into a charging position adjacent to a charging station 301, 302, 303.

The sensing unit 210 may further comprise a wireless transceiver 321 configured to transmit 320 information on the exterior surface of the container, i.e. the information scanned by the sensing unit. This information may, for example, be transmitted 320 to a wireless transceiver 322 of controller 240. Alternatively, the information may be transmitted to a wireless transceiver or receiver of another recipient. The transmitted information can, for example, include a unique identifier of the container, the state of a seal attached to the container doors, information included within an RFID tag, a class identification of the container, or the international maritime dangerous goods, IMDG, code of the container. Alternatively, the transmitted information may be raw pictures and/or video captured by the sensing unit 210 for further processing, e.g. by controller 240. Preferably, this information may be transmitted over a point-to-point data bridge.

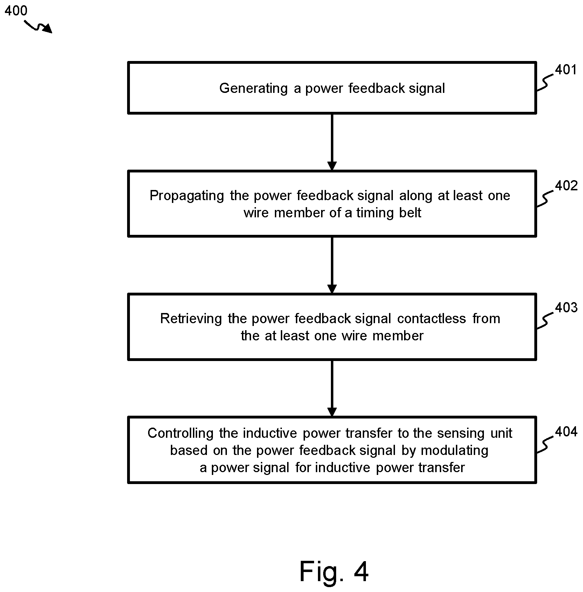

Fig. 4 shows steps 400 of a method for controlling inductive power transfer in a container scanning system, according to embodiments. The container scanning system comprises a rail that is mountable on a support or a beam of a container handling crane. The rail comprises space for wiring. The container scanning system further comprises a sensing unit movably mounted along the rail, wherein the sensing unit is configured to scan an exterior surface of a container and configured to be powered by inductive power transfer. The container scanning system further comprises, within the space for wiring, a timing belt configured to move the sensing unit along the rail, wherein the timing belt comprises at least one wire member. The container scanning system may, for example, be the system illustrated in Fig. 2 or Fig. 3.

In a first step 401, a power feedback signal indicative for the operational state of the inductive power transfer is generated by the sensing unit. In a next step 402, the generated power feedback signal is propagated along the at least one wire member of the timing belt. In a following step 403, the power feedback signal is retrieved contactless from the at least one wire member. In a next step 404, the power feedback signal may be used to control the inductive power transfer to the sensing unit by modulating the power signal for inductive power transfer, i.e. the power signal that feeds the transmitting coil of the IPT.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A container scanning system (200) comprising:
- a rail (201) that is mountable on a support or beam of a container handling crane, wherein the rail comprises space (202) for wiring;
- a sensing unit (210) movably mounted along the rail, wherein the sensing unit is configured to scan an exterior surface of a container and configured to be powered by inductive power transfer (207);
- within the space for wiring (202), a timing belt (203) configured to move the sensing unit along the rail, wherein the timing belt comprises at least one wire member (252, 262, 272);
wherein the sensing unit (210) is further configured to generate a power feedback signal indicative for the operational state of the inductive power transfer (207) to the sensing unit, and configured to propagate the power feedback signal along the at least one wire member (252, 262); and wherein the container scanning system further comprises a contactless receiver (205) configured to contactless retrieve the power feedback signal from the at least one wire member (252, 262, 272).

2. The container scanning system according to claim 1, wherein the at least one wire member (252, 262) is embedded within the timing belt (203), or wherein the at least one wire member (272) is mounted onto an external surface of the timing belt (203).

3. The container scanning system according to any of the preceding claims, wherein the at least one wire member (252, 262, 272) is made of a conductive material or a light-conductive material.

4. The container scanning system according to any of the preceding claims, wherein the at least one wire member (252, 262, 272) is a tensile cord configured to reinforce the timing belt.

5. The container scanning system according to any of the preceding claims, wherein the container scanning system further comprises, in the space (202) for wiring, an inductive power transfer wiring (204) along which a power signal (241) propagates for inductive power transfer (207) to the sensing unit (210); and wherein the sensing unit further comprises an induction receiver element that is contactless coupled to the induction power transfer wiring.

6. The container scanning system according to claim 5, wherein the inductive power transfer wiring (204) extends along at least a portion of the rail along which the sensing unit is moveable.

7. The container scanning system according to claim 5 or 6, wherein the inductive power transfer wiring (204) is a Litz wire.

8. The container scanning system according to any of claim 1 - 4, wherein the container scanning system further comprises one or more inductive battery charging stations (301, 302, 303) arranged adjacent to the rail at respective positions; wherein the one or more inductive battery charging stations receive a power signal (311, 312, 313) for inductive power transfer to the sensing unit (210); and wherein the sensing unit further comprises a battery configured to power the sensing unit, and an induction receiver element configured to charge the battery when the induction charging element is contactless coupled to a battery charging station (301, 302, 303).

9. The container scanning system according to any of the preceding claims, wherein the container scanning system further comprises a controller (240) configured to:
- receive (206) the power feedback signal from the contactless receiver (205); and
- control the inductive power transfer (207) to the sensing unit based on the power feedback signal.

10. The container scanning system according to claims 8 and 9, wherein the power feedback signal comprises a state of charge of the battery, and wherein the controller (240) is further configured to move the sensing unit (210) along the rail into a position adjacent to an inductive battery charging station (301, 302, 303) based on the state of charge of the battery.

11. The container scanning system according to any of the preceding claims, wherein the sensing unit further comprises a wireless transceiver configured to transmit information of the exterior surface of the container.

12. The container scanning system according to claim 11, wherein the wireless transceiver is configured to transmit information of the exterior surface of the container over a point-to-point data bridge.

13. The container scanning system according to any one of the previous claims, wherein the sensing unit is coupled to a rail car movably coupled to the rail.

14. A method for controlling inductive power transfer in a container scanning system; the container scanning system comprising a rail (201) that is mountable on a support or a beam of a container handling crane, wherein the rail comprises space (202) for wiring; a sensing unit (210) movably mounted along the rail, wherein the sensing unit is configured to scan an exterior surface of a container and configured to be powered by inductive power transfer (207); and the system further comprising, within the space for wiring (202), a timing belt (203) configured to move the sensing unit (210) along the rail (200), wherein the timing belt comprises at least one wire member (252, 262, 272); the method comprising:
- by the sensing unit (210), generating a power feedback signal indicative for the operational state of the inductive power transfer (207) to the sensing unit;
- by the sensing unit (210), propagating the power feedback signal along the at least one wire member (252, 262, 272); and
- by a contactless receiver (205), retrieving the power feedback signal contactless from the at least one wire member (252, 262, 272).

15. The method according to claim 14, further comprising controlling the inductive power transfer (207) to the sensing unit based on the power feedback signal by modulating a power signal for inductive power transfer.
